# NEUE EUROPÄISCHE PATENTSCHRIFT

(11) **EP 2 480 800 B2**
(45) Veröffentlichungstag und Bekanntmachung des Hinweises auf die Entscheidung über den Einspruch: **03.11.2021**
(45) Hinweis auf die Patenterteilung: 18.07.2018
(21) Anmeldenummer: 10770974.3
(22) Anmeldetag: 06.09.2010
(51) Int. Cl.: F16F 1/38

(54) **ELASTOMERES BUCHSENLAGER MIT KUNSTSTOFFAUSSENROHR**
ELASTOMERIC JOURNAL BEARING HAVING A PLASTIC OUTER TUBE
PALIER À DOUILLE ÉLASTOMÉRIQUE COMPRENANT UN TUBE EXTERNE EN PLASTIQUE

(30) Priorität: 24.09.2009 DE 102009044958
(43) Veröffentlichungstag der Anmeldung: 01.08.2012
(73) Patentinhaber: BOGE Elastmetall GmbH, 49401 Damme (DE)
(72) Erfinder: SCHARF, Jörg, 65558 Eppenrod (DE)
(74) Vertreter: Bossmeyer, Jörg Peter
(86) Internationale Anmeldenummer: PCT/DE2010/050068
(87) Internationale Veröffentlichungsnummer: WO 2011/035779

(56) Entgegenhaltungen:
- EP-A1- 0 896 168
- EP-A1- 1 333 191
- WO-A2-2008/043097
- DE-C1- 19 730 405
- DE-U1- 8 901 525
- US-A1- 2004 108 639

## Beschreibung

Die Erfindung betrifft ein Verfahren zur Herstellung eines elastomeres Buchsenlagers, dessen im Wesentlichen zylinderförmige Außenhülse beziehungsweise dessen Außenrohr aus einem Kunststoff besteht. Sie bezieht sich auf ein Verfahren zur Herstellung eines Buchsenlagers der genannten Art, dessen Auspresskraft durch die erfindungsgemäße Gestaltung erhöht ist.

Elastomere Buchsenlager beziehungsweise Gummibuchsen werden insbesondere im Fahrzeugbau zur Lagerung unterschiedlicher Fahrzeugkomponenten in großem Umfang und in verschiedenen Ausbildungsformen eingesetzt. Entsprechend ihrem grundsätzlichen Aufbau bestehen derartige Lager aus einem strang- oder rohrförmigen metallischen Innenteil, einem dieses Innenteil im Allgemeinen konzentrisch umgebenden Außenrohr und einem zwischen dem Innenteil und dem auch als Außenhülse bezeichneten Außenrohr angeordneten und mit ihnen durch Vulkanisation verbundenen elastomeren Lagerkörper, durch welchen eine Dämpfungsfeder gebildet ist. Ein gattungsgemäßes Lager ist beispielsweise aus der DE 40 20 713 A1 und aus der US 2004/0108639 A1 bekannt.
In Abhängigkeit von dem jeweiligen Einsatzzweck und dem im Zusammenhang damit geforderten Dämpfungsverhalten kann die Dämpfungswirkung des Lagerkörpers gegebenenfalls zusätzlich durch ein hydraulisches Dämpfungssystem ergänzt sein. Hierzu sind dann in dem Lager mindestens zwei Kammern zur Aufnahme eines fluiden Dämpfungsmittels ausgebildet, welche durch mindestens einen Dämpfungsmittelkanal miteinander verbunden sind. Bei bekannten Buchsenlagern besteht das Außenrohr beziehungsweise die Außenhülse, ebenso wie das Innenteil, zumeist aus Metall. Insbesondere zur Gewichtsreduktion wird jedoch das Außenrohr eines Buchsenlagers in neuerer Zeit teilweise auch aus Kunststoff ausgebildet. Buchsenlager der beschriebenen Art werden in Kraftfahrzeugen unter anderem auch zur Lagerung von Teilen des Fahrwerks eingesetzt. Soweit sie dabei beispielsweise zur Lagerung von Fahrwerkslenkern eingesetzt werden, ist es üblich, die Lager zur Verbindung mit dem Fahrwerkslenker in ein an dem Fahrwerkslenker vorgesehenes Aufnahmeauge einzupressen. In der Praxis besteht hierbei die Forderung, dass die Verbindung zwischen dem Buchsenlager und dem Fahrwerkslenker hohen Auspresskräften standhalten muss, damit das Lager bei entsprechenden Belastungen nicht aus dem Aufnahmeauge herausgedrückt wird. Dabei hat es sich gezeigt, dass die Auspresskräfte von Buchsenlagern, welche eine Außenhülse aus Kunststoff aufweisen, deutlich geringer sind, als bei Lagern mit einem Außenrohr aus Stahl oder Aluminium.
Ein zur Aufnahme durch ein Aufnahmeauge vorgesehenes elastomeres Buchsenlager, dessen Außenhülse aus Kunststoff besteht, ist beispielsweise durch die DE 10 2004 054 618 A1 bekannt geworden. Die in der Druckschrift beschriebene Lösung bezieht sich insbesondere auch auf Maßnahmen zur Erhöhung der Auspresskraft des Lagers. Demgemäß weist das beschriebene Lager eine spezielle Geometrie mit einer Taillierung seines Lagerkörpers auf, welcher die bezogen auf seine axiale Erstreckung im Bereich der Taillierung angeordnete Außenhülse aus Kunststoff axial beidseitig bei teilweiser radialer Überdeckung überragt. Entsprechend einer vorgesehenen Ausbildungsform ist zudem an dem Lagerkörper im Bereich seiner Taille ein Hinterschnitt zur Erhöhung der Auspresskraft vorgesehen. Insoweit weist das beschriebene Lager eine vergleichsweise komplizierte geometrische Form auf.

Aufgabe der Erfindung ist es, eine Lösung anzugeben, welche es ermöglicht, die Auspresskraft bei einem mit einer Außenhülse aus Kunststoff ausgestatteten Buchsenlager unter Beibehaltung einer einfachen Form für das Lager zu erhöhen.

Die Aufgabe wird durch ein Verfahren zur Herstellung eines elastomeres Buchsenlagers mit den Merkmalen des Hauptanspruchs gelöst. Vorteilhafte Aus- beziehungsweise Weiterbildungen der Erfindung sind durch die Unteransprüche gegeben.
Das gemäß dem zur Lösung der Aufgabe vorgeschlagenen Verfahren hergestellte elastomere Buchsenlager ist insbesondere zur Aufnahme durch ein Aufnahmeauge bestimmt, in welches das Buchsenlager eingepresst wird. Es besteht in an sich bekannter Weise aus einem metallischen Innenteil, einem das Innenteil umgebenden Außenrohr und einem zwischen dem Innenteil und dem Außenrohr angeordneten, mit ihnen durch Vulkanisation verbundenen elastomeren Lagerkörper. Dabei besteht das Außenrohr entsprechend der Aufgabe aus einem Kunststoff. Das metallische Innenteil ist strang- oder rohrförmig ausgebildet.
Zur Erhöhung der Auspresskraft des durch ein Aufnahmeauge aufzunehmenden Buchsenlagers weist dessen Außenrohr erfindungsgemäß eine dünne Ummantelung in Form einer an das Außenrohr vulkanisierten elastomeren Schicht auf. Während der Kunststoff, aus welchem das Außenrohr ausgebildet ist, ein gewisses Kriechverhalten zeigt, durch welches die Auspresskraft eines entsprechenden Lagers gegenüber Buchsenlagern mit einer Außenhülse aus Stahl oder Aluminium deutlich herabgesetzt ist, weist die nach der Erfindung vorgesehene elastomere Ummantelung ein Verharrungsvermögen auf, so dass in Bezug auf ein das Lager aufnehmendes Aufnahmeauge eine hohe Auspresskraft sichergestellt wird. Hierdurch ist es möglich, ein für die Aufnahme durch ein Aufnahmeauge vorgesehenes Buchsenlager zur Verfügung zu stellen, welches aufgrund der Beschaffenheit seines Außenrohres aus einem Kunststoff ein vergleichsweise geringes Gewicht besitzt und dennoch eine hohe Auspresskraft aufweist. Durch die Ummantelung des Außenrohrs mit dem Elastomer wird dabei das Gewicht des Buchsenlagers kaum beeinflusst. Auch bedarf es zur Sicherstellung einer hohen Auspresskraft des Lagers hinsichtlich der Lagergeometrie keiner besonderen Gestaltungsmaßnahmen. Vorzugsweise ist die Ummantelung des Außenrohrs des Buchsenlagers als eine dünne Gummischicht ausgebildet, die weniger als 2 mm dick ist. Grundsätzlich ist es denkbar, das Außenrohr des Lagers nur abschnittsweise mit einer entsprechenden elastomeren Ummantelung zu versehen. Günstiger und insbesondere bei sehr geringen Schichtdicken bevorzugt, ist es jedoch, wenn die Ummantelung das Außenrohr über dessen gesamte axiale Erstreckung umgibt.
Das erfindungsgemäße Prinzip einer Ummantelung mit einer elastomeren Schicht ist grundsätzlich bei allen Buchsenlagern mit einem aus Kunststoff bestehenden Außenrohr anwendbar. Demgemäß kann das Außenrohr beziehungsweise die Außenhülse des erfindungsgemäßen Buchsenlagers vorzugsweise aus einem Polyamid, einem Polyurethan oder auch aus einem ABS-Kunststoff (Acrylnitril-Butadien-Styrol) bestehen.
Ferner ist es möglich, das Lager in Abhängigkeit vom jeweiligen Einsatzzweck auch als Hydrobuchse auszubilden. Hierbei sind dann, wie aus dem Stand der Technik bekannt, in dem Lager mindestens zwei Kammern zur Aufnahme eines fluiden Dämpfungsmittels ausgebildet, welche durch mindestens einen Kanal miteinander verbunden sind.
Nach dem zur Herstellung des zuvor beschriebenen elastomeren Buchsenlagers und zur Lösung der Aufgabe vorgesehenen Verfahren wird zur Ummantelung des Außenrohres ein vorgefertigtes elastomeres Formteil in die bei der Herstellung der Buchse zur Vulkanisation verwendete Form eingelegt und dieses beispielsweise schlauchförmige Formteil gemeinsam mit der Buchse vulkanisiert. Für eine sichere Verbindung der Ummantelung mit dem Außenrohr erfolgt die Vulkanisation der Ummantelung vorzugsweise durch die Kombination eines zur Erzeugung der Außenhülse verwendeten Spritzpressverfahrens (TM-Transfer Moulding) oder eines Spritzgießverfahrens (IM-Injection Moulding) mit einem Postbondingprozess, bei welchem das bereits teilvulkanisierte Gummiformteil während der Erzeugung des Außenrohrs vollständig ausvulkanisiert und dabei mit dem, vorzugsweise mit einer Haftschicht beziehungsweise einem zusätzlichen Haftmittel versehenen Außenrohr verbunden wird. Ein entsprechendes, das Anhaften eines teilvulkanisierten Formteils an eine Metall- oder Kunststofffläche durch dessen Ausvulkanisieren ermöglichendes Verfahren, für welches inzwischen der Begriff Postbonding gebräuchlich ist wird beispielsweise in der DE 199 19 573 A1 beschrieben. Mit dem beschriebenen Verfahren einer Kombination aus TM-Transfer oder IM-Injection mit einem Postbondingprozess lassen sich elastomere Ummantelungen mit Schichtdicken von weniger als 2 mm realisieren, wobei jedoch zur Erzeugung ultradünner, hautartiger Gummischichten mit einer Dicke von 0,2 mm oder weniger, andere Verfahren zum Einsatz gelangen.

Die Erfindung soll nachfolgend nochmals anhand eines Ausführungsbeispiels erläutert werden. In den zugehörigen Zeichnungen zeigen:
- Fig. 1:: eine teilweise geschnittene räumliche Darstellung einer Ausbildungsform des erfindungsgemäßen Buchsenlagers,
- Fig. 2:: das Buchsenlager gemäß Fig. 1 in einer Explosionsdarstellung.
- Fig. 3a:: den Einfluss der Schichtdicke für die Ummantelung des Außenrohrs auf das Verhalten beim Einpressen des Lagers in ein Aufnahmeauge

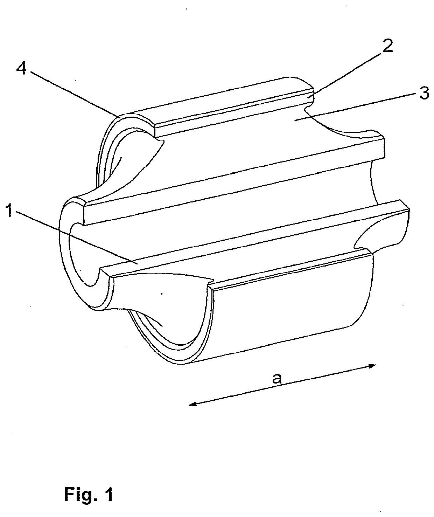

Die Fig. 1 zeigt eine mögliche Ausbildungsform eines erfindungsgemäß hergestellten elastomeren Buchsenlagers in einer räumlichen Darstellung, wobei das Lager zur besseren Verdeutlichung seines Aufbaus in einem Teilschnitt dargestellt ist. Das Lager besteht aus dem rohrförmigen metallischen Innenteil 1, dem dieses Innenteil 1 konzentrisch umgebenden Außenrohr 2 aus Kunststoff und dem zwischen dem Innenteil 1 und dem Außenrohr 2 angeordneten und mit ihnen durch Vulkanisation verbundenen elastomeren Lagerkörper 3. Gemäß der Erfindung ist das aus Kunststoff bestehende Außenrohr 2 mit einer Ummantelung 4 in Form einer dünnen elastomeren Schicht, vorzugsweise einem Gummimantel, versehen. Die dünne Ummantelung 4 aus Gummi bedeckt das Außenrohr 2 über dessen gesamte Erstreckung in der axialen Richtung a und weist eine Dicke d von zumindest weniger als 2 mm auf.

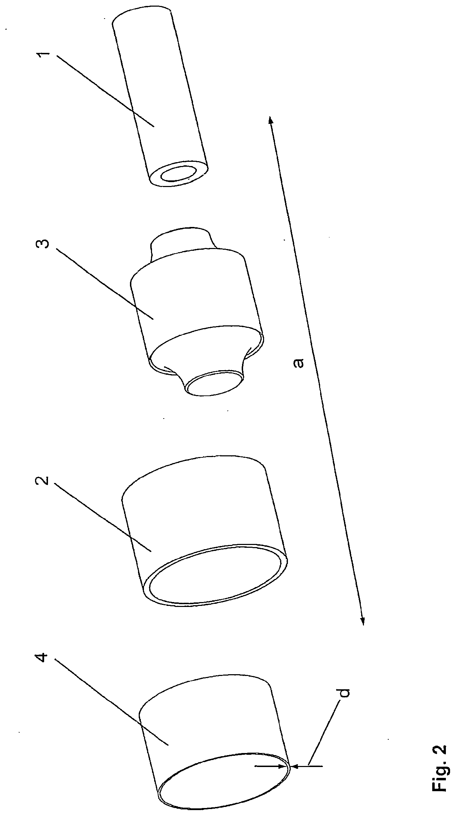

In der Fig. 2 ist das Buchsenlager gemäß der Fig. 1 nochmals in einer Explosionsdarstellung gezeigt. Hier sind seine einzelnen Elemente, nämlich das rohrförmige Innenteil 1, der elastomere Lagerkörper 3 beziehungsweise die Gummifeder, das Kunststoffaußenrohr 2 sowie die elastomere Ummantelung 4 des Außenrohrs nochmals gut zu erkennen. Die Ummantelung 4 des Außenrohrs 2 wird dadurch realisiert, dass das in der Fig. 2 erkennbare Formteil aus Gummi in eine zur Herstellung des Buchsenlagers bei der Vulkanisation verwendete Form eingelegt und gemeinsam mit dem Buchsenlager vulkanisiert wird.

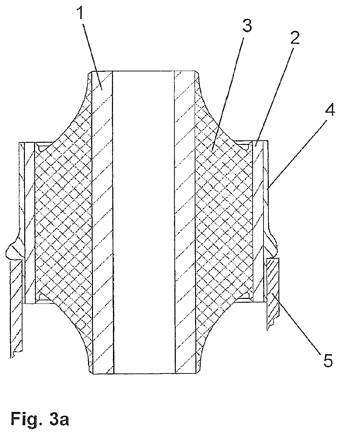

In der Figur 3a, in der das erfindungsgemäße Buchenslager in einer Schnittdarstellung mit einem in axialer Richtung geführten Schnitt dargestellt ist, wird der Vorgang des Einpressens des Buchsenlagers in ein Aufnahmeauge 5 in einer Prinzipdarstellung veranschaulicht. Aufgrund der auf ihre Bemessung zurückzuführenden Überdeckung zwischen dem gummiummantelten Außenrohr 2 des Buchsenlagers und dem Aufnahmeauge 5 sowie aufgrund des hohen Beharrungsvermögens der Ummantelung 4, welche im Ergebnis zu der erfindungsgemäß angestrebten hohen Auspresskraft des Gummilagers führt, kann es beim Einpressen des Gummilagers in das Aufnahmeauge 5, wie in der Fig. 3a gezeigt, dazu kommen, dass sich die Ummantelung 4 beziehungsweise der Gummimantel beim Einpressvorgang zusammenschiebt. Dies kann durch den Einsatz eines Gleitmittels verhindert werden.

### Bezugszeichenliste

- 1: Innenteil
- 2: Außenrohr
- 3: Lagerkörper
- 4: Ummantelung
- 5: Aufnahmeauge

- a: axiale Richtung
- d: Dicke

## Patentansprüche

1. Verfahren zur Herstellung eines elastomeren Buchsenlagers, bestehend aus einem metallischen, strang- oder rohrförmigen Innenteil (1), einem das Innenteil (1) umgebenden Außenrohr (2) und einem zwischen dem Innenteil (1) und dem Außenrohr (2) angeordneten, mit ihnen durch Vulkanisation verbundenen elastomeren Lagerkörper (3), wobei das Außenrohr (2) aus Kunststoff ausgebildet ist, **dadurch gekennzeichnet, dass** das Außenrohr (2) eine Ummantelung (4) in Form einer an das Außenrohr vulkanisierten elastomeren Schicht aufweist, wobei zur Ausbildung der Ummantelung (4) des Außenrohres (2) ein vorgefertigtes elastomeres Formteil in die bei der Herstellung der Buchse zur Vulkanisation verwendete Form eingelegt und gemeinsam mit der Buchse vulkanisiert wird.

2. Verfahren nach Anspruch 1, **dadurch gekennzeichnet, dass** die Vulkanisation der Ummantelung (4) durch die Kombination eines zur Erzeugung der Außenhülse (2) verwendeten Spritzpress- oder Spritzgießverfahrens mit einem Postbondingprozess erfolgt, bei dem das die spätere Ummantelung (4) ausbildende teilvulkanisierte elastomere Formteil unter Vermittlung eines Haftmittels an das Außenrohr (2) gehaftet wird.

## Claims

1. Method for manufacturing an elastomer bush bearing, consisting of a metallic, strand- or tube-shaped inner part (1), an outer tube (2) surrounding the inner part (1) and an elastomer bearing body (3) arranged between the inner part (1) and the outer tube (2) and connected to them by vulcanisation, wherein the outer tube (2) is formed of plastic, **characterised in that** the outer tube (2) has a covering (4) in the form of an elastomer layer vulcanised on the outer tube, wherein, in order to form the covering (4) of the outer tube (2), a pre-fabricated elastomer moulded part is laid into the mould used for vulcanisation when manufacturing the bush and is vulcanised together with the bush.

2. Method according to claim 1, **characterised in that** the covering (4) is vulcanised by combining an injection pressing or injection moulding process, which is used to generate the outer sleeve (2), with a post bonding process, in which the partially vulcanised elastomer moulded part forming the subsequent covering (4) is adhered to the outer tube (2) with arrangement of an adhesive.

## Revendications

1. Procédé de fabrication d'un palier à douille élastomère, constitué d'une partie interne (1) métallique, en forme de tige ou de forme tubulaire, d'un tube externe (2) entourant la partie interne (1) et d'un corps de palier élastomère (3), disposé entre la partie interne (1) et le tube externe (2), relié avec eux par vulcanisation, le tube externe (2) étant constitué de matière plastique, **caractérisé en ce que** le tube externe (2) comprend une enveloppe (4) sous la forme d'une couche élastomère vulcanisée sur le tube externe, dans lequel, pour la réalisation de l'enveloppe (4) du tube externe (2), un élément moulé élastomère préfabriqué est inséré dans le moule utilisé pour la fabrication de la douille pour la vulcanisation et est vulcanisée conjointement avec la douille.

2. Procédé selon la revendication 1, **caractérisé en ce que** la vulcanisation de l'enveloppe (4) est effectuée par la combinaison d'un procédé de pressage ou de moulage par injection utilisé pour la fabrication du manchon externe (2) avec un processus de post-liaison, dans lequel l'élément moulé élastomère partiellement vulcanisé constituant plus tard l'enveloppe (4) est collé au tube externe (2) au moyen d'un adhésif.
